# EUROPÄISCHE PATENTSCHRIFT

(11) **EP 2 796 673 B1**
(45) Veröffentlichungstag und Bekanntmachung des Hinweises auf die Patenterteilung: **07.03.2018**
(21) Anmeldenummer: 14159243.6
(22) Anmeldetag: 12.03.2014
(51) Int. Cl.: F01L 1/344

(54) **Zentralventil für einen Schwenkmotorversteller**
Central valve for a pivotable motor adjuster
Soupape centrale pour un moteur pivotant à l'ajustage

(30) Priorität: 22.04.2013 DE 102013104051; 22.04.2013 DE 102013104031
(43) Veröffentlichungstag der Anmeldung: 29.10.2014
(73) Patentinhaber: Hilite Germany GmbH, 97828 Marktheidenfeld (DE)
(72) Erfinder: Goll, Jürgen, 97906 Collenberg (DE); Hutzelmann, Stefanie, 97782 Gräfendorf (DE); Kröpelin, Jan, 30926 Seelze (DE); Schulze, Dietmar, 35516 Münzenberg (DE)

(56) Entgegenhaltungen:
- EP-A1- 2 363 579
- DE-A1-102010 061 337
- DE-U1-202004 021 243
- US-A1- 2009 133 652
- US-A1- 2009 212 244

## Beschreibung

Die Erfindung geht aus von einem Zentralventil mit den im Oberbegriff des Anspruchs 1 angegebenen Merkmalen, wie es aus der DE 10 2006 012 775 A1 bekannt ist.

Ein solches Zentralventil ist Teil eines Schwenkmotorverstellsystems, das einen Rotor enthält, der durch hydraulischen Druck an einem seiner beiden Arbeitsanschlüsse in jeweils eine seiner beiden Drehrichtungen verstellt werden kann.

Ständiges Ziel der Entwicklung von Schwenkmotorverstellsystemen ist einerseits eine möglichst geringe Belastung der hydraulischen Pumpe, da diese in der Regel alle hydraulischen Verbraucher eines Fahrzeugs versorgen muss, und andererseits eine möglichst rasche Verstellbarkeit. Um diese an sich gegenläufigen Anforderungen besser zu erfüllen, ist es bekannt, Druckspitzen bei der Nockenwellenverstellung über Rückschlagventile auszunutzen.

Bei dem aus der DE 10 2006 012 775 A1 bekannten Schwenkmotorverstellsystem sind die Druckkammern des Rotors mit Rückschlagventilen versehen, so dass Druckspitzen, wie sie bei einer raschen Verstellung auftreten, genutzt werden. Dabei wird ein Teil der Hydraulikflüssigkeit aus den der einen Drehrichtung zugeordneten Druckkammern dem Fluss von der Ölpumpe zugeführt, so dass ein größerer Volumenstrom für die anderen Druckkammern zur Verfügung steht.

Aus der EP 2 375 014 A1 ist es bekannt, Rückschlagventile zur Ausnutzung von Nockenwellenwechselmomenten in das Zentralventil zu integrieren, indem Bandrückschlagventile an der Innenseite des Gehäuserohrs angebracht werden. An den beiden Arbeitsanschlüssen und an dem Versorgungsanschluss des Gehäuserohrs drückt jeweils ein Bandrückschlagventil von innen gegen das Gehäuserohr. Wenn ausreichend hoher Druck an dem entsprechenden Anschluss anliegt, öffnet sich das Bandrückschlagventil, so dass an einem Arbeitsanschluss in das Zentralventil hineinströmende Hydraulikflüssigkeit zusammen mit Hydraulikfluid von dem Versorgungsanschluss dem anderen Arbeitsanschluss zugeführt werden kann. Ausgehend von einer Mittelstellung des Zentralventils ist zunächst eine Schaltstellung proportional ansteuerbar, in welcher die Druckspitzen des zu entlastenden Arbeitsanschlusses gegenüber dem zu belastenden Arbeitsanschluss gesperrt sind. Im Anschluss ist eine weitere Schaltstellung zur Nutzung der Nockenwellenwechselmomente ansteuerbar.

Aus der DE 10 2010 061 337 A1 ist ein Ventil für einen Schwenkmotorversteller bekannt, bei dem jeder Arbeitsanschluss A bzw. B in einen Arbeitsanschluss A* bzw. B* zur Nutzung von Nockenwellenwechselmomenten und einen Arbeitsanschluss A bzw. B zur direkten Durchleitung von Hydraulikfluid zu den Druckkammern des Schwenkmotorverstellers aufgetrennt ist. Die Arbeitsanschlüsse A* und B* zur Nutzung von Nockenwellenwechselmomenten weisen Rückschlagventile auf. In einer Mittelstellung des Kolbens sind diese beiden Arbeitsanschlüsse A* und B* mittels eines gemeinsamen Ringsteges blockiert. Durch das Blockieren des Ringsteges in der Mittelstellung wird die Regelqualität in der Mittelstellung verbessert.

Die EP 1 596 039 B1 betrifft ein Ventil zur Nutzung von Nockenwellenwechselmomenten. Dabei sind Rückschlagventile in Ringstegen eines Hohlkolbens vorgesehen. Die Verstellung erfolgt ausschließlich über Nockenwellenwechselmomente. Ein Tankabflussanschluss ist nicht vorgesehen.

Aufgabe der vorliegenden Erfindung ist, einen Weg aufzuzeigen, wie mit einem kostengünstigen Zentralventil in einfacher Weise eine rasche Nockenwellenverstellung mit einer geringen Belastung einer Hydraulikpumpe verbunden werden kann.

Diese Aufgabe wird durch ein Zentralventil mit den im Anspruch 1 angegebenen Merkmalen gelöst. Vorteilhafte Weiterbildungen der Erfindung sind Gegenstand von Unteransprüchen.

Bei einem erfindungsgemäßen Zentralventil sind in einer ersten Stellung des Kolbens der erste Arbeitsanschluss mit dem Versorgungsanschluss und der zweite Arbeitsanschluss mit dem Tankabflussanschluss verbunden. In einer zweiten Stellung - d.h. der Mittelstellung des Kolbens - sind der erste Arbeitsanschluss und der zweite Arbeitsanschluss bis auf Leckageströme abgesperrt. In einer dritten Stellung des Kolbens sind der zweite Arbeitsanschluss mit dem Versorgungsanschluss und der erste Arbeitsanschluss mit dem Tankabflussanschluss verbunden. Jeder Arbeitsanschluss kann also mit dem Tankabflussanschluss verbunden werden. Ein einziger Tankabflussanschluss genügt. Es können jedoch auch beidseitig des Zentralventils Tankabflussanschlüsse vorgesehen sein. Ein Tankabflussanschluss im Bereich des Motorgehäuseaustritts ist insbesondere dann von Vorteil, wenn der Schwenkmotorversteller ein Kettenversteller mit einer zu schmierenden Kette ist. Zahnriemenversteller sind hingegen außen von Hydraulikfluid - insbesondere Öl - frei zu halten.

Die Arbeitsanschlüsse sind durch jeweils eine oder mehrere in axialer Richtung mit einem gleichen Abstand von einem ersten Ende des Gehäuserohrs vorgesehene Radialausnehmungen gebildet.

Bei einem erfindungsgemäßen Zentralventil trägt der Kolben auf seiner Außenseite zumindest ein Rückschlagventil. Dieses Rückschlagventil schafft eine zwischen einer Außenseite des Kolbens und einer Innenseite des Gehäuserohres ausgebildete Verbindung zwischen dem ersten Arbeitsanschluss und dem zweiten Arbeitsanschluss, wenn an dem ersten Arbeitsanschluss ein Druck anliegt, der einen Schwellenwert übersteigt, und sich der Kolben in seiner dritten Stellung befindet.

In einer vorteilhaften Weiterbildung der Erfindung schafft wenigstens ein weiteres Rückschlagventil eine Verbindung zwischen dem zweiten Arbeitsanschluss und dem ersten Arbeitsanschluss, wenn an dem zweiten Arbeitsanschluss ein Druck anliegt, der einen Schwellenwert übersteigt, und der Kolben in seiner ersten Stellung ist.

Das Rückschlagventil ermöglicht eine Nutzung von Nockenwellenwechselmomenten. Hydraulikfluid, das von einem Arbeitsanschluss in Richtung zu einem Tankabflussanschluss T fließt, wird dem mit Hydraulikfluid zu versorgendem anderen Arbeitsanschluss zugeführt. Somit kann eine rasche Verstellung des Schwenkmotorverstellers mit einer geringen Belastung der Hydraulikpumpe des Systems verbunden werden. Indem die Rückschlagventile außen auf dem Kolben sitzen, kann ein Strömungspfad von jeweils einem der beiden Arbeitsanschlüsse zu dem Tankabflussanschluss T verlaufen. Es ist keine Aufspaltung der Arbeitsanschlüsse A, B erforderlich ist. D.h. im Gegensatz zur DE 10 2006 012 775 A1 muss nicht jeder Arbeitsanschluss in einen Bohrung für die direkte Durchleitung zu der Kammer und eine Rückschlagventil-Bohrung für die Nutzung der Nockenwellenwechselmomente aufgeteilt werden. Wenn eines der Rückschlagventile eines erfindungsgemäßen Zentralventils geöffnet ist, strömt Hydraulikflüssigkeit zwischen der Außenseite des Kolbens und der Innenseite des Gehäuserohrs von einem der beiden Arbeitsanschlüsse zu dem Versorgungsanschluss P.

Eine vorteilhafte Weiterbildung sieht vor, dass auf der Außenseite des Kolbens mehrere erste Rückschlagventile sitzen, die die eine Verbindung zwischen dem ersten Arbeitsanschluss und dem zweiten Arbeitsanschluss schaffen, wenn der Kolben in seiner dritten Stellung ist und an dem ersten Arbeitsanschluss ein Druck anliegt, und auf der Außenseite des Kolbens mehrere zweite Rückschlagventile sitzen, die eine Verbindung zwischen dem zweiten Arbeitsanschluss und dem ersten Arbeitsanschluss öffnen, wenn der Kolben in seiner ersten Stellung ist und an dem zweiten Arbeitsanschluss ein Druck anliegt, der einen Schwellenwert übersteigt. Wenn an dem Arbeitsanschluss ein ausreichend hoher Druck anliegt, können mehrere Rückschlagventile vorteilhaft eine größere Menge Hydraulikflüssigkeit hindurch strömen lassen, so dass Druckspitzen noch besser ausgenutzt werden können. Mehrere erste Rückschlagventile sowie mehrere zweite Rückschlagventile können beispielsweise in Umfangsrichtung um den Kolben herum verteilt angeordnet sein.

Eine weitere vorteilhafte Weiterbildung sieht vor, dass die ersten Rückschlagventile in einer Hülse angeordnet sind, in welcher der Kolben steckt. Die zweiten Rückschlagventile können in derselben Hülse oder in einer weiteren Hülse angeordnet sein, in welcher der Kolben steckt. Auf diese Weise lässt sich das Zentralventil einfach zusammenbauen, nämlich indem eine oder mehrere Hülsen auf den Kolben aufgeschoben und so die Rückschlagventile außen an dem Kolben befestigt werden. Erste und zweite Rückschlagventile in verschiedenen Hülsen anzuordnen hat den Vorteil, dass dasselbe Bauteil in unterschiedlicher Orientierung auf den Kolben aufgesteckt werden kann, um erste und zweite Rückschlagventile an dem Kolben zu befestigen.

Der Kolben kann in einer besonders vorteilhaften Ausgestaltung als Hohlkolben ausgeführt sein. In diesem Fall kann dessen Innenraum problemlos dafür genutzt werden, um einen Strömungspfad von jeweils einem der beiden Arbeitsanschlüsse zu dem Tankabflussanschluss T zur Verfügung zu stellen. Zudem können Öffnungen des Gehäuserohrs, welche die Arbeitsanschlüsse bilden, in beiden Richtungen von Hydraulikflüssigkeit durchströmt werden. Im Gegensatz zur EP 2 375 014 A1 muss nicht jeder Arbeitsanschluss in einen Bohrung für die direkte Durchleitung zu der Kammer und eine Rückschlagventil-Bohrung für die Nutzung der Nockenwellenwechselmomente aufgeteilt werden.

Weitere Einzelheiten und Vorteile der Erfindung werden an Ausführungsbeispielen unter Bezugnahme auf die beigefügten Zeichnungen beschrieben. Gleiche und einander entsprechende Bauteile sind darin mit übereinstimmenden Bezugszeichen versehen. Es zeigen:

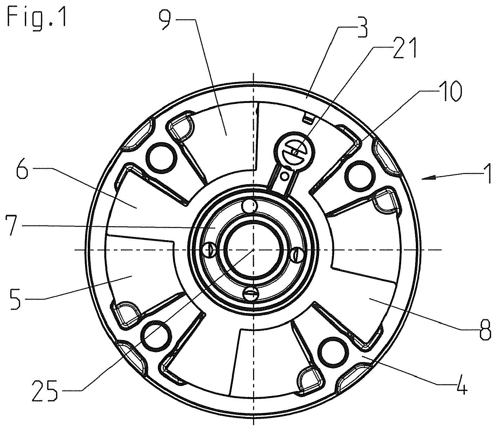

Fig. 1 in einer geschnittenen Darstellung einen Schwenkmotorversteller ohne zugehöriges Zentralventil,
Fig. 2 den Schwenkmotorversteller aus Fig. 1 in einer perspektivischen Ansicht von außen,
Fig. 3 einen Längsschnitt eines ersten Ausführungsbeispiel eines Zentralventils für einen Schwenkmotorversteller gemäß Fig. 1 und Fig. 2,
Fig. 4 einen Längsschnitt eines weiteren Ausführungsbeispiels eines Zentralventils,
Fig. 5 einen Längsschnitt des Zentralventils gemäß dem ersten Ausführungsbeispiel, wobei sich ein Kolben in einer Mittenstellung befindet und
Fig. 6 ein Detail aus Fig. 5.

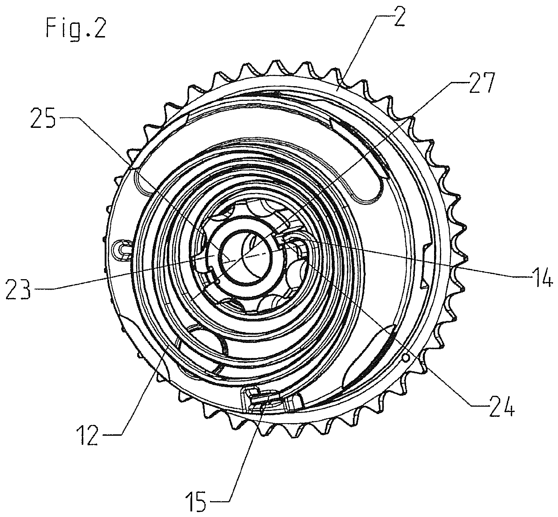

Mit einem Schwenkmotorversteller wird während des Betriebes eines Verbrennungsmotors die Winkellage an der Nockenwelle verändert. Durch Verdrehen der Nockenwelle werden die Öffnungs- und Schliesszeitpunkte der Gaswechselventile so verschoben, dass der Verbrennungsmotor bei der jeweiligen Drehzahl seine optimale Leistung bringt. Der Schwenkmotorversteller ermöglicht dabei eine stufenlose Verstellung der Nockenwelle. Der Schwenkmotorversteller hat einen zylindrischen Stator 1, der drehfest mit einem in Fig. 2 ersichtlichen Zahnrad 2 verbunden ist. Im Ausführungsbeispiel ist das Zahnrad 2 ein Kettenrad, über das eine nicht näher dargestellte Kette geführt ist. Das Zahnrad 2 kann aber auch ein Zahnriemenrad sein, über das ein Antriebsriemen als Antriebselement geführt ist. Über dieses Antriebselement und das Zahnrad 2 ist der Stator 1 mit der Kurbelwelle in bekannter Weise antriebsverbunden.

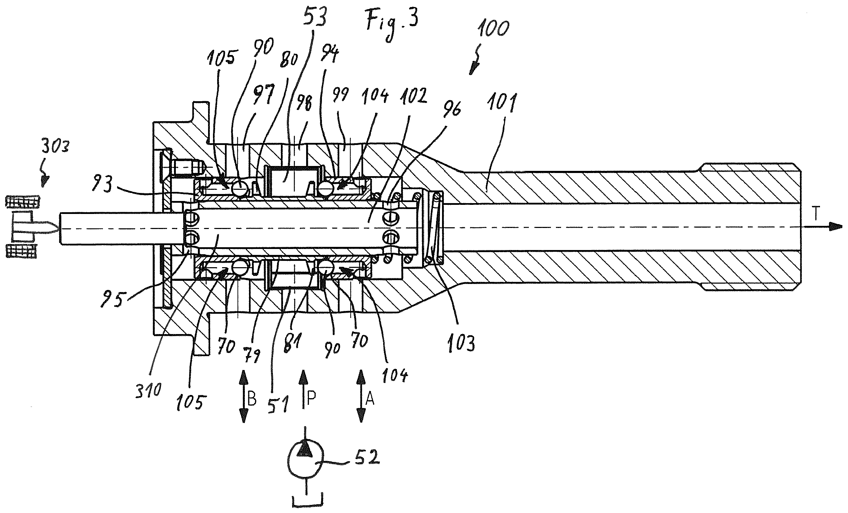

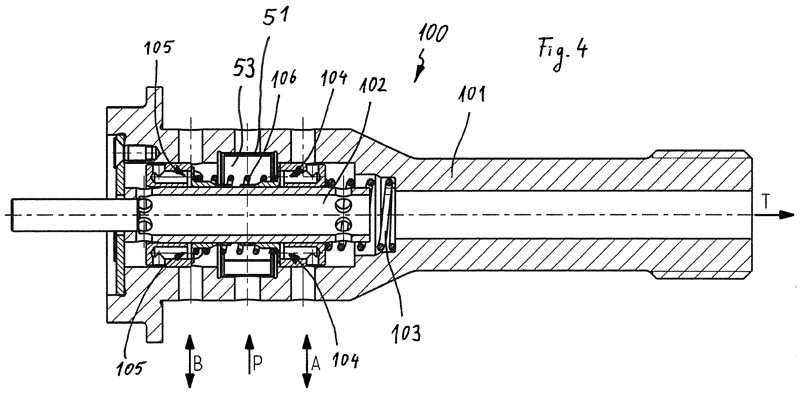

Der Stator 1 und das Zahnrad 2 können alternativ auch einstückig miteinander ausgebildet sein, wenn die andere Seite des Stators 1 öffenbar ist. Dabei können der Stator 1 und das Zahnrad 2 aus metallischem Werkstoff und/oder aus hartem Kunststoff bestehen. Als metallische Werkstoffe kommen u. a. Sintermetalle, Stahlbleche und Aluminium in Frage. Der Stator 1 umfasst einen zylindrischen Statorgrundkörper 3, an dessen Innenseite radial nach innen in gleichen Abständen Stege 4 abstehen. Zwischen benachbarten Stegen 4 werden Druckräume 5 gebildet, in die, über ein in Fig. 3 und Fig. 4 dargestelltes Zentralventil 100 gesteuert, Druckmedium eingebracht wird. Zwischen benachbarten Stegen 4 ragen Flügel 6, die radial nach außen von einem zylindrischen Rotorgrundkörper 7 eines Rotors 8 abstehen. Diese Flügel 6 unterteilen die Druckräume 5 zwischen den Stegen 4 jeweils in zwei Druckkammern 9 und 10.

Die Stege 4 liegen mit ihren Stirnseiten dichtend an der Außenmantelfläche des Rotorgrundkörpers 7 an. Die Flügel 6 ihrerseits liegen mit ihren Stirnseiten dichtend an der zylindrischen Innenwand des Statorgrundkörpers 3 an.

Der Rotor 8 ist drehfest mit der nicht näher dargestellten Nockenwelle verbunden. Um die Winkellage zwischen der Nockenwelle zu verändern, wird der Rotor 8 relativ zum Stator 1 gedreht. Hierzu wird je nach gewünschter Drehrichtung das Druckmedium in den Druckkammern 9 oder 10 unter Druck gesetzt, während die jeweils anderen Druckkammern 10 oder 9 zum Tank hin entlastet werden.

Gemäß Fig. 2 weist der Schwenkmotorversteller eine Spiralfeder 12 auf, mit welcher der Rotor 8 gegen den Stator 1 zur Kompensation eines Reibmomentes an der Nockenwelle in die eine Drehrichtung verspannt ist. Die Spiralfeder 12 weist mehrere Windungen 27 auf. Die Spiralfeder 12 ist mit ihrem inneren Ende 14 drehfest in einer Ausnehmung 24 an einer Nabe 23 des Rotors 8 aufgenommen. Die Spiralfeder 12 ist mit ihrem äußeren Ende 15 drehfest am Stator 1 befestigt. Innerhalb der Nabe 23 ist eine zentrale Bohrung 25 vorgesehen, in die ein Zentralventil 100 eingesteckt und mit der Nockenwelle verschraubt ist.

Fig. 3 zeigt dieses Zentralventil 100 für den Schwenkmotorversteller in einem Längsschnitt. Das Zentralventil 100 hat ein Gehäuserohr 101, das in axialem Abstand voneinander angeordnete Radialausnehmungen 97, 98, 99 aufweist, die einen ersten Arbeitsanschluss A, einen Versorgungsanschluss P und einen zweiten Arbeitsanschluss B bilden. Der Versorgungsanschluss P ist bevorzugt zwischen den beiden Arbeitsanschlüssen A, B angeordnet. Bei dem dargestellten Ausführungsbeispiel hat das Gehäuserohr 101 an einer Stirnseite einen Tankabflussanschluss T. Der Tankabflussanschluss T kann aber auch als ein radialer Anschluss ausgebildet sein. Bei dem gezeigten Ausführungsbeispiel hat das Gehäuserohr 101 nur drei radiale Anschlüsse, nämlich zwei Arbeitsanschlüsse A, B und einen Versorgungsanschluss P. Alle Radialausnehmungen 97, 98, 99 des Gehäuserohrs 101 haben deshalb einen von drei Abständen von einem ersten Ende des Gehäuserohrs 101. Separate Arbeitsanschlüsse für die Nutzung von Nockenwellenwechselmomenten sind nicht vorgesehen.

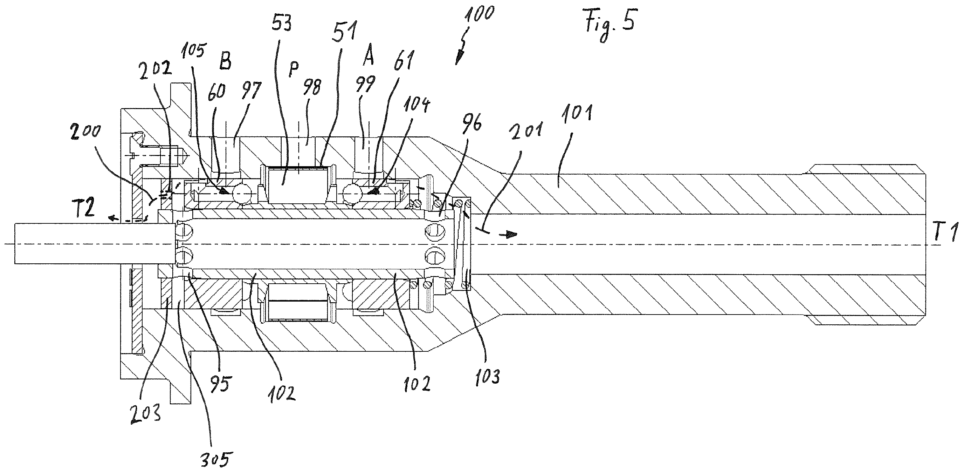

In dem Gehäuserohr 101 ist ein Hohlkolben 102 angeordnet, der in Längsrichtung relativ zu dem Gehäuserohr 101 gegen die Rückstellkraft einer Rückstellfeder 103 beweglich ist und radiale Öffnungen 95, 96 aufweist. In einer zeichnerisch nicht dargestellten ersten Stellung des Hohlkolbens 102 ist der erste Arbeitsanschluss A mit dem Versorgungsanschluss P verbunden und gleichzeitig der zweite Arbeitsanschluss B mit dem Tankabflussanschluss T verbunden. Hingegen sind in einer zweiten Stellung des Hohlkolbens 102 der erste Arbeitsanschluss A und der zweite Arbeitsanschluss B abgesperrt. Diese Absperrung beinhaltet jedoch geringe Leckageverluste. Bei dieser zweiten Stellung handelt es sich um die in Fig. 5 dargestellte Mittelstellung. In einer in der Zeichnung Fig. 3 dargestellten dritten Stellung des Hohlkolbens 102 ist der zweite Arbeitsanschluss B mit dem Versorgungsanschluss P verbunden und gleichzeitig der erste Arbeitsanschluss A mit dem Tankabflussanschluss T verbunden.

Stromabwärts des Versorgungsanschlusses P ist ein Pumpenrückschlagventil 51 angeordnet. Dem Pumpenrückschlagventil 51 folgt stromabwärts ein Innenraum 53. Dieser Innenraum 53 liegt im Strömungsweg zwischen den beiden Arbeitsanschlüssen A, B.

Der Hohlkolben 102 trägt auf seiner Außenseite mehrere Rückschlagventile 104, 105. Eine Hälfte dieser Rückschlagventile, die im Folgenden als erste Rückschlagventile 104 bezeichnet werden, öffnen eine Verbindung zwischen dem ersten Arbeitsanschluss A und dem Innenraum 53 dem Hydraulikfluid von dem Versorgungsanschluss P bzw. der Ölpumpe 52 zugeführt wird. Damit kann über den Innenraum 53 auch zwischen den beiden Arbeitsanschlüssen A, B Hydraulikfluid fließen, wenn der Hohlkolben 102 in seiner dritten Stellung ist und an dem Arbeitsanschluss A ein Druck anliegt, der einen Schwellenwert übersteigt. Die andere Hälfte der Rückschlagventile, die im Folgenden als zweite Rückschlagventile 105 bezeichnet werden, öffnen eine Verbindung zwischen dem zweiten Arbeitsanschluss B und dem Versorgungsanschluss P. Damit kann über den Versorgungsanschluss P auch zwischen den beiden Arbeitsanschlüssen A, B Hydraulikfluid fließen, wenn der Hohlkolben 102 in seiner ersten Stellung ist und an dem zweiten Arbeitsanschluss B ein Druck anliegt, der einen Schwellenwert übersteigt. Wenn sich der Hohlkolben 102 in seiner ersten oder in seiner dritten Stellung befindet, können die Rückschlagventile 104, 105 also einen Strömungsweg öffnen, auf dem Hydraulikfluid zwischen der Außenseite des Hohlkolbens 102 und der Innenseite des Gehäuserohrs 101 von einem der beiden Arbeitsanschlüsse A bzw. B zu dem Innenraum 53 strömt. Damit steht das Hydraulikfluid dem anderen Arbeitsanschluss B bzw. A bei erhöhtem Volumenstrombedarf zur Verfügung.

In einem Schwenkmotorverstellsystem sind zum Verstellen des Rotors 8 dessen erste Druckkammern 9 über einen der beiden Arbeitsanschlüsse A bzw. B an den Versorgungsanschluss P angeschlossen, während gleichzeitig zweite Druckkammern 10 des Rotors 8 über den anderen Arbeitsanschluss B bzw. A an den Tankabflussanschluss T angeschlossen sind. Bei Rotorverstellung liegt hydraulischer Druck an dem Arbeitsanschluss an, der mit dem Tankabflussanschluss T verbunden ist. Dieser hydraulische Druck ist umso größer, je rascher die Verstellung stattfindet. Die Rückschlagventile 104, 105 des dargestellten Zentralventils 100 öffnen sich, wenn ein solcher Druck einen Schwellenwert übersteigt und ermöglichen so eine Nutzung dieser Druckspitzen. Das Zentralventil 100 ermöglicht deshalb eine schnellere Verstellung bei einer geringeren Belastung der Hydraulikpumpe des Schwenkmotorverstellsystems.

Die ersten Rückschlagventile 104 können in einer Hülse 94 angeordnet sein, die an dem Hohlkolben 102 befestigt ist. Die Rückstellfeder 103 kann sich mit einem Ende an dieser Hülse 94 abstützen. Das andere Ende der Rückstellfeder 103 kann sich an einer Innenfläche des Gehäuserohrs 101 abstützen. Die Hülse 94 kann in der zweiten Stellung des Hohlkolbens 102 die Radialausnehmung 99 verschließen, so dass der Hydraulikstrom vom und zum ersten Arbeitsanschluss A bis auf einen Leckagestrom blockiert ist.

Die Hülse 94 kann beispielsweise auf den Hohlkolben 102 aufgepresst sein. Eine andere Möglichkeit für eine starre Verbindung zwischen der Hülse 94 und dem Hohlkolben 102 ist eine Schweißverbindung. Die zweiten Rückschlagventile 105 können in derselben Hülse 94 angeordnet sein oder in einer zweiten Hülse 93, die ebenfalls auf den Hohlkolben 102 aufgeschoben ist.

Die Hülse 93 mit den zweiten Rückschlagventilen 105 kann in der zweiten Stellung des Hohlkolbens 102 die Radialausnehmung 97 verschließen, so dass der Hydraulikstrom vom und zum ersten Arbeitsanschluss B bis auf einen Leckagestrom blockiert ist.

Die Rückschlagventile 104, 105 können beispielsweise Kugelventile sein, also einen Schließkörper 90 in Form einer Kugel aufweisen. Die Schließkörper 90 der ersten und zweiten Rückschlagventile 104, 105 sind jeweils in Längsrichtung des Hohlkolbens 102 relativ zu dem Hohlkolben 102 beweglich. Die ersten Rückschlagventile 104 und die zweiten Rückschlagventile 105 sind dabei entgegengesetzt orientiert.

Die radialen Öffnungen 95, 96 des Hohlkolbens 102, durch die Hydraulikflüssigkeit hindurch treten kann, befinden sich jeweils in einem Endabschnitt des Hohlkolbens 102. Die ersten Rückschlagventile 104 und die zweiten Rückschlagventile 105 sind an der Außenseite eines mittleren Abschnitts des Hohlkolbens 102 befestigt, der keine radialen Öffnungen aufweist.

Die Schließkörper 90 kommen in diesem Ausführungsbeispiel ohne Federn aus. Der jeweilige Schließkörper 90 ist also in Grenzen zwischen einem Ventilsitz 70 und einem Wegbegrenzer 80 bzw. 81 frei beweglich. Dabei sorgt der vom Versorgungsanschluss P kommende Innendruck dafür, dass die Rückschlagventile 104, 105 geschlossen sind. Die Rückschlagventile 104, 105 weisen in der axial zum Versorgungsanschluss P weisenden Richtung Wegbegrenzer 80, 81 auf. Diese Wegbegrenzer 80, 81 verhindern, dass die Schließkörper 90 axial soweit auf den Versorgungsanschluss P strömen, dass die Zeit zum Schließen des Rückschlagventils 104 bzw. 105 zu lange dauern würde. Die Wegbegrenzer 80, 81 erstrecken sich von dem Hohlkolben 102 radial nach außen. Die Wegbegrenzer 80, 81 sind an einer Begrenzerhülse 79 angeordnet, die mittig zwischen den beiden Rückschlagventilen 104, 105 auf den Hohlkolben 102 gesteckt ist.

Fig. 4 zeigt ein weiteres Ausführungsbeispiel eines Zentralventils 100 für einen Schwenkmotorversteller. Dieses Ausführungsbeispiel unterscheidet sich von dem Ausführungsbeispiel der Fig. 3 unter anderem dadurch, dass die Rückschlagventile keine Kugelventile sind. Die ersten Rückschlagventile 104 haben bei diesem Ausführungsbeispiel einen gemeinsamen ringförmigen Schließkörper. Dieser Schließkörper ist in Längsrichtung des Hohlkolbens 102 gegen die Kraft einer Druckfeder 106 beweglich, die mit einem Ende gegen den Schließkörper drückt. Das andere Ende der Druckfeder 106 drückt gegen einen gleich ausgebildeten Schließkörper der zweiten Rückstellventile 105.

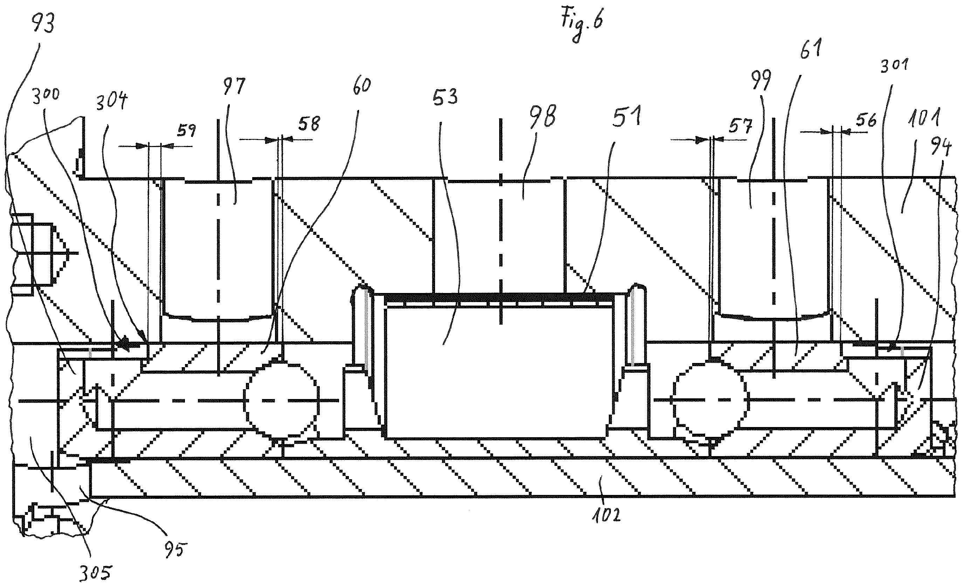

Fig. 5 und das Detail Fig. 6 zeigen für das erste Ausführungsbeispiel - d.h. für Fig. 3 - den Hohlkolben 102 in der zweiten Stellung. Diese zweite Stellung des Hohlkolbens 102 ist eine Mittelstellung. In dieser Mittelstellung sind der erste Arbeitsanschluss A und der zweite Arbeitsanschluss B abgesperrt. Dabei decken die beiden Ringstege 60, 61 die Radialausnehmungen 97, 99 mit Überdeckungen 59, 58, 57, 56 ab. Die Überdeckungen 59, 56 zum Tankabflussanschluss T hin sind größer als die Überdeckungen 58, 57 zu dem Versorgungsanschluss P hin. Im Beispiel sind die Überdeckungen 59, 56 zum Tankabflussanschluss T hin doppelt so groß, wie die Überdeckungen 58, 57 zu dem Versorgungsanschluss P hin. Dabei betragen die Überdeckungen 59, 56 zum Tankabflussanschluss T hin ca. 2/10mm. Hingegen betragen die Überdeckungen 58, 57 zu dem Versorgungsanschluss P hin 1/10mm. Da der Hohlkolben 102 axialverschieblich gegenüber dem Gehäuserohr 101 ist, ist dort zwangsläufig ein Radialspiel vorhanden. Somit sind auch Spalte an den Überdeckungen 59, 58, 57, 56, die einen stark gedrosselten Fluss von Hydraulikfluid ermöglichen. Dabei nimmt die Drosselung an den Spalten mit der Länge der Überdeckung - d.h. der Spaltlänge - zu. Die Überdeckungen 59, 56 zum Tankabflussanschluss T hin sind dabei so groß, dass dort die Drosselung sehr stark ist. Die geringe Menge Hydraulikfluid, die bei Druckstößen in den Druckkammern an den Überdeckungen 59, 56 durch die langen Spalte fließt, fließt zum Tankabflussanschluss T und kann nicht das Rückschlagventil 104 bzw. 105 von hinten öffnen. Die Strömungswiderstände zum Tankabfluss sind nämlich bei derart geringen Volumenströmen sehr gering. Damit kann es bei wechselweisen Druckstößen infolge von Nockenwellenwechselmomenten in der Mittelstellung nicht zu Regelproblemen kommen.

Da die Spaltlängen zu dem Versorgungsanschluss P relativ kurz sind, werden auch beide Arbeitsanschlüsse A, B vom Versorgungsanschluss P mit gedrosseltem hydraulischem Druck versorgt. Damit ist dann der Rotor 8 gegenüber dem Stator 1 hydraulisch verspannt. Zur hydraulischen Verspannung in der Mittelstellung wird damit das Zentralventil hinsichtlich der Strömungsverhältnisse entsprechend der DE 198 23 619 A1 ausgeführt.

Fig. 5 zeigt mit gestrichelten Linien eine alternative Ausführungsform. Dabei sind Hydraulikflüsse 200, 201 dargestellt. Diese Ausführungsform macht insbesondere dann Sinn, wenn auf die radialen Öffnungen 95, 96 verzichtet wird. Dann kann der Innenraum des Hohlkolbens 102 entweder für eine andere Ölleitungsfunktion verwendet werden. Anstelle des Hohlkolbens 102 ist alternativ ein Kolben aus Vollmaterial vorgesehen. Vom ersten Arbeitsanschluss A zum ersten Tankabflussanschluss T1 erfolgt der Hydraulikfluss 201 außen am Hohlkolben 102 bzw. Kolben entlang. Vom zweiten Arbeitsanschluss B zum zweiten Tankabflussanschluss T2 erfolgt der Hydraulikfluss 200 außen am Hohlkolben 102 bzw. Kolben entlang. Dabei ist entweder ein Loch 202 in der Scheibe 203 vorgesehen, oder auf die Scheibe 203 wird verzichtet. Ein zweiter Tankabflussanschluss T2 nach außen hin ist insbesondere dann sinnvoll, wenn eine Kette zum Antrieb des Schwenkmotorverstellers verwendet wird, die mit Hydraulikfluid bzw. Öl zu schmieren ist.

In weiteren Ausführungsformen wird entweder nur auf die einen radialen Öffnungen 95 oder nur auf die anderen radialen Öffnungen verzichtet.

In der Mittenstellung müssen der erste Arbeitsanschluss A und der zweite Arbeitsanschluss B nicht abgesperrt sein. In einer alternativen Ausgestaltung der Erfindung kann bei ausreichend Druck von der Ölpumpe auch auf die beiden einander näher stehenden Überschneidungen 58, 57 verzichtet werden. Somit sind dann beide Arbeitsanschlüsse A, B vom Versorgungsanschluss P mit hydraulischem Druck versorgt. Damit ist dann der Rotor 8 gegenüber dem Stator 1 hydraulisch verspannt.

In einer weiteren alternativen Ausführungsform kann ausschließlich ein Arbeitsanschluss A oder B über ein Rückschlagventil 104 oder 105 Hydraulikfluid aus dem Fluss von dem jeweils anderen Arbeitsanschluss B oder A zum Tankabflussanschluss saugen. Dies kann insbesondere in Kombination mit einer angepassten Spiralfeder 12 erfolgen, welche an die Bevorzugung der einen Drehrichtung adaptiert wird.

In sämtlichen Ausführungsbeispielen sind Drosselstellen 300, 301 ersichtlich, die im Folgenden anhand der Fig. 3 und der Fig. 6 erläutert werden und auch Gegenstand der nicht vorveröffentlichten DE 10 2012 111 033.6 sind. Mit einer derartigen Drosselstelle 300 bzw. 301 wird eine hohe Regelqualität beim Schwenkmotornockenwellenversteller erreicht.

Es ist ein in Fig. 3 ersichtlicher elektromagnetischer Aktor 303 zur Betätigung des Hohlkolbens 102 vorgesehen. Dabei wird bei Rücknahme des Stromes am elektromagnetischen Aktor 303 bereits relativ frühzeitig begonnen, das Hydraulikfluid aus der Druckkammer zum Tankabflussanschluss T auszuleiten. Überdies verläuft die Kennlinie, welche den Volumenstrom dieser Ausleitung über der Stromstärke darstellt, relativ linear. Wie in Fig. 6 ersichtlich ist, weist der Ringsteg 60 eine dem elektromagnetischen Aktor 303 zugewandte Steuerkante 304 auf. Damit bildet sich ein Raum 305 innerhalb des Gehäuserohrs 101, der einerseits von der Hülse 93 am Hohlkolben 102 und andererseits von der Scheibe 203 begrenzt ist. Das Hydraulikfluid kann aus diesem Raum 305 über die radiale Öffnung 95 oder alternativ dem Loch 202 zu dem Tankabfluss T herausgeführt werden.

Wäre die Drosselstelle 300 jedoch nicht vorhanden, so könnte der Schwenkmotornockenwellenversteller jedoch - beispielsweise infolge von Nockenwellenwechselmomenten - bestrebt sein, mehr Hydraulikfluid in den Raum 305 zu drücken, als aus dem Raum 305 durch die radiale Öffnung 95 oder dem Loch 202 herausgedrückt werden kann. Dann könnte bei schneller Senkung der Stromstärke am Elektromagneten der Hohlkolben 102 zunächst nicht gegen den vom ersten Arbeitsanschluss A unter einem relativ hohen Druck stehenden Raum 305 verschoben werden. D.h. der Hohlkolben 102 könnte nicht dem elektromagnetischen Aktor 303 folgen und eine Lücke würde sich dort öffnen. Mangels der Verschiebung des Hohlkolbens 102 könnte sich der Strömungsquerschnitt an den Arbeitsanschlüssen A, B auch nicht ändern. Aus diesem Grunde ist die Drosselstelle 300 zwischen dem ersten Arbeitsanschluss A und dem Raum 305 vorgesehen. Infolge des damit nur im geringen Maße vom Arbeitsanschluss A nachgeführten Hydraulikfluids kann sich der Raum 305 schneller über die Öffnung 95 oder das Loch 202 entlasten und die Ausleitung zum Tankabflussanschluss T erfolgt früher. Die Kennlinie, welche den Durchfluss dieser Ausleitung über dem Strom darstellt, verläuft damit linearer, als ohne die Drosselstelle 300. Damit ist eine genaue Regelung ermöglicht.

Damit ist an der Hülse 93 auf deren von der anderen Hülse 94 abgewandten Seite die Steuerkante 304 vorgesehen. Der Raum 305 ist innerhalb des Gehäuserohrs 101 einerseits von der einen Hülse 93 und andererseits von der zum Gehäuserohr festen Scheibe 202 begrenzt. Vom Raum 305 geht die radiale Öffnung 95 bzw. das Loch 202 ab. Diese Öffnung 95 bzw. das Loch 202 verbindet den Raum 305 mit einem zu einem Tankablaufanschluss T führenden Ablaufkanal 310 hydraulisch. Zwischen der Steuerkante 304 und dem Raum 305 ist die Drosselstelle 300 vorgesehen.

Die gleiche Situation stellt sich an der Drosselstelle 301 dar. Jedoch ist der Effekt geringer.

## Patentansprüche

1. Zentralventil für einen Schwenkmotorversteller mit
einem Gehäuserohr (101), das einen ersten Arbeitsanschluss (A), einen Versorgungsanschluss (P), einen zweiten Arbeitsanschluss (B) und einen Tankabflussanschluss (T) aufweist, wobei die Arbeitsanschlüsse (A, B) durch jeweils eine oder mehrere in axialer Richtung mit einem gleichen Abstand von einem ersten Ende des Gehäuserohrs (101) vorgesehene Radialausnehmungen (97, 99) gebildet sind,
einem von dem Gehäuserohr (101) umgebenen Kolben (102), der relativ zu dem Gehäuserohr (101) beweglich ist, wobei
in einer ersten Stellung des Kolbens (102) der erste Arbeitsanschluss (A) mit dem Versorgungsanschluss (P) und der zweite Arbeitsanschluss (B) mit dem Tankabflussanschluss (T) verbunden ist,
in einer zweiten Stellung des Kolbens (102) dieser in einer Mittenstellung positioniert ist, und
in einer dritten Stellung des Kolbens (102) der zweite Arbeitsanschluss (B) mit dem Versorgungsanschluss (P) und der erste Arbeitsanschluss (A) mit dem Tankabflussanschluss (T) verbunden ist,
wobei der Kolben (102) auf seiner Außenseite ein oder mehrere erste Rückschlagventile (104) trägt, die einen Strömungsweg von dem ersten Arbeitsanschluss (A) zu dem zweiten Arbeitsanschluss (B) zwischen einer Außenseite des Kolbens (102) und einer Innenseite des Gehäuserohres (101) öffnen, wenn der Kolben (102) in seiner dritten Stellung ist und an dem ersten Arbeitsanschluss (A) ein Druck anliegt, der einen Schwellenwert übersteigt.

2. Zentralventil nach Anspruch 1, **dadurch gekennzeichnet, dass** der Kolben (102) auf seiner Außenseite ein oder mehrere zweite Rückschlagventile (105) trägt, die einen Strömungsweg von dem zweiten Arbeitsanschluss (B) zu dem ersten Arbeitsanschluss (A) öffnen, wenn der Kolben (102) in seiner ersten Stellung ist und an dem zweiten Arbeitsanschluss (B) ein Druck anliegt, der einen Schwellenwert übersteigt.

3. Zentralventil nach Anspruch 1 oder 2, **dadurch gekennzeichnet, dass** in der zweiten Stellung des Kolbens (102) der erste Arbeitsanschluss (A) und der zweite Arbeitsanschluss (B) abgesperrt sind.

4. Zentralventil nach Anspruch 1 oder 2, **dadurch gekennzeichnet, dass** in der zweiten Stellung des Kolbens (102) der erste Arbeitsanschluss (A) und der zweite Arbeitsanschluss (B) mit Druck beaufschlagt sind.

5. Zentralventil nach Anspruch 1, **dadurch gekennzeichnet, dass** die ersten Rückschlagventile (104) an einer Hülse (94) angeordnet sind, die den Kolben (102) umgibt.

6. Zentralventil nach Anspruch 5, **dadurch gekennzeichnet, dass** die Hülse (94) starr mit dem Kolben (102) verbunden ist.

7. Zentralventil nach Anspruch 5 oder 6, **dadurch gekennzeichnet, dass** die Hülse auf den Kolben (102) aufgepresst oder mit ihm verschweißt ist.

8. Zentralventil nach einem der Ansprüche 5 bis 7, **dadurch gekennzeichnet, dass** der Kolben (102) in dem Gehäuserohr (101) gegen die Kraft einer Rückstellfeder (103) beweglich ist, die sich an der Hülse (94) abstützt.

9. Zentralventil nach Anspruch 2, **dadurch gekennzeichnet, dass** die zweiten Rückschlagventile (105) in einer weiteren Hülse (93) angeordnet sind, die den Kolben (102) umgibt.

10. Zentralventil nach Anspruch 2, **dadurch gekennzeichnet, dass** die ersten und zweiten Rückschlagventile (104, 105) eine gemeinsame Druckfeder (106) aufweisen.

11. Zentralventil nach einem der Ansprüche 2, 9, 10, **dadurch gekennzeichnet, dass** der Kolben (102) auf seiner Außenseite mehrere erste Rückschlagventile (104) und mehrere zweite Rückschlagventile (105) sitzen.

12. Zentralventil nach Anspruch 1, **dadurch gekennzeichnet, dass** das Rückschlagventil (104 bzw. 105) einen Schließkörper (90) aufweist, der sich in Längsrichtung des Kolbens (102) bewegt.

13. Zentralventil nach Anspruch 12, **dadurch gekennzeichnet, dass** der Schließkörper (90) in Grenzen zwischen einem Ventilsitz (70) und einem Wegbegrenzer (80 bzw. 81) frei beweglich ist.

14. Zentralventil nach einem der vorstehenden Ansprüche, **dadurch gekennzeichnet, dass** das Gehäuserohr (101) nur drei radiale Anschlüsse (A, P, B) aufweist und somit alle radialen Öffnungen (97, 98, 99) einen von drei Abständen von einem ersten Ende des Gehäuserohrs (101) haben.

## Claims

1. Central valve for a pivoting motor adjuster, comprising
a housing tube (101) which has a first working port (A), a supply port (P), a second working port (B) and a tank outlet port (T), wherein the working ports (A, B) are formed by in each case one or more radial recesses (97, 99) provided so as to have an equal spacing from a first end of the housing tube (101) in the axial direction,
a piston (102) which is surrounded by the housing tube (101) and which is movable relative to the housing tube (101), wherein
in a first position of the piston (102), the first working part (A) is connected to the supply port (P), and the second working port (B) is connected to the tank outlet port (T),
in a second position of the piston (102), said piston is positioned in a central position, and
in a third position of the piston (102), the second working port (B) is connected to the supply port (P), and the first working port (A) is connected to the tank outlet port (T),
wherein, on its outer side, the piston (102) bears one or more first check valves (104) which open a flow path from the first working port (A) to the second working port (B) between an outer side of the piston (102) and an inner side of the housing tube (101) whenever the piston (102) is in its third position and a pressure which exceeds a threshold value prevails at the first working port (A).

2. Central valve according to Claim 1, **characterized in that**, on its outer side, the piston (102) bears one or more second check valves (105) which open a flow path from the second working port (B) to the first working port (A) whenever the piston (102) is in its first position and a pressure which exceeds a threshold value prevails at the second working port (B).

3. Central valve according to Claim 1 or 2, **characterized in that**, in the second position of the piston (102), the first working port (A) and the second working port (B) are shut off.

4. Central valve according to Claim 1 or 2, **characterized in that**, in the second position of the piston (102), the first working port (A) and the second working port (B) are charged with pressure.

5. Central valve according to Claim 1, **characterized in that** the first check valves (104) are arranged at a sleeve (94) which surrounds the piston (102).

6. Central valve according to Claim 5, **characterized in that** the sleeve (94) is connected rigidly to the piston (102).

7. Central valve according to Claim 5 or 6, **characterized in that** the sleeve is pressed onto the piston (102) or is welded thereto.

8. Central valve according to one of Claims 5 to 7, **characterized in that** the piston (102) is movable in the housing tube (101) counter to the force of a restoring spring (103), which is supported against the sleeve (94).

9. Central valve according to Claim 2, **characterized in that** the second check valves (105) are arranged in a further sleeve (93) which surrounds the piston (102).

10. Central valve according to Claim 2, **characterized in that** the first and second check valves (104, 105) have a common compression spring (106).

11. Central valve according to one of Claims 2, 9, 10, **characterized in that** multiple first check valves (104) and multiple second check valves (105) are seated the piston (102) on its outer side.

12. Central valve according to Claim 1, **characterized in that** the check valve (104 or 105) has a closing body (90) which moves in the longitudinal direction of the piston (102).

13. Central valve according to Claim 12, **characterized in that** the closing body (90) is freely movable inside boundaries between a valve seat (70) and a travel limiter (80 or 81).

14. Central valve according to one of the preceding claims, **characterized in that** the housing tube (101) has only three radial ports (A, P, B), and thus all radial openings (97, 98, 99) have one of three spacings from a first end of the housing tube (101).

## Revendications

1. Soupape centrale pour un organe de réglage de moteur pivotant, avec
un tube de boîtier (101), qui présente un premier raccord de travail (A), un raccord d'alimentation (P), un deuxième raccord de travail (B) et un raccord d'écoulement de réservoir (T), dans lequel les raccords de travail (A, B) sont formés respectivement par un ou plusieurs évidement(s) radial/radiaux (97, 99) prévu(s) en direction axiale à une même distance d'une première extrémité du tube de boîtier (101),
un piston (102) entouré par le tube de boîtier (101), qui est mobile par rapport au tube de boîtier (101), dans lequel
dans une première position du piston (102), le premier raccord de travail (A) est relié au raccord d'alimentation (P) et le deuxième raccord de travail (B) est relié au raccord d'écoulement de réservoir (T),
dans une deuxième position du piston (102), celui-ci est positionné dans une position moyenne, et
dans une troisième position du piston (102), le deuxième raccord de travail (B) est relié au raccord d'alimentation (P) et le premier raccord de travail (A) est relié au raccord d'écoulement de réservoir (T),
dans lequel le piston (102) porte sur son côté extérieur une ou plusieurs première(s) soupape(s) de non-retour (104), qui ouvre(nt) une voie d'écoulement du premier raccord de travail (A) au deuxième raccord de travail (B) entre un côté extérieur du piston (102) et un côté intérieur du tube de boîtier (101), lorsque le piston (102) se trouve dans sa troisième position et qu'il existe au premier raccord de travail (A) une pression, qui dépasse une valeur de seuil.

2. Soupape centrale selon la revendication 1, **caractérisée en ce que** le piston (102) porte sur son côté extérieur une ou plusieurs deuxième(s) soupape(s) de non-retour (105), qui ouvre (nt) une voie d'écoulement du deuxième raccord de travail (B) au premier raccord de travail (A), lorsque le piston (102) se trouve dans sa première position et qu'il existe au deuxième raccord de travail (B) une pression, qui dépasse une valeur de seuil.

3. Soupape centrale selon la revendication 1 ou 2, **caractérisée en ce que** dans la deuxième position du piston (102) le premier raccord de travail (A) et le deuxième raccord de travail (B) sont fermés.

4. Soupape centrale selon la revendication 1 ou 2, **caractérisée en ce que** dans la deuxième position du piston (102) le premier raccord de travail (A) et le deuxième raccord de travail (B) sont soumis à une pression.

5. Soupape centrale selon la revendication 1, **caractérisée en ce que** les premières soupapes de non-retour (104) sont disposées sur une douille (94), qui entoure le piston (102).

6. Soupape centrale selon la revendication 5, **caractérisée en ce que** la douille (94) est assemblée rigidement au piston (102).

7. Soupape centrale selon la revendication 5 ou 6, **caractérisée en ce que** la douille est pressée sur le piston (102) ou est soudée à celui-ci.

8. Soupape centrale selon l'une quelconque des revendications 5 à 7, **caractérisée en ce que** le piston (102) est mobile dans le tube de boîtier (101) contre la force d'un ressort de rappel (103), qui prend appui sur la douille (94).

9. Soupape centrale selon la revendication 2, **caractérisée en ce que** les deuxièmes soupapes de non-retour (105) sont disposées dans une autre douille (93), qui entoure le piston (102).

10. Soupape centrale selon la revendication 2, **caractérisée en ce que** les premières et les deuxièmes soupapes de non-retour (104, 105) présentent un ressort de pression commun (106).

11. Soupape centrale selon une des revendications 2, 9, 10, **caractérisée en ce que** plusieurs premières soupapes de non-retour (104) et plusieurs deuxièmes soupapes de non-retour (105) sont assises le piston (102) sur son côté extérieur.

12. Soupape centrale selon la revendication 1, **caractérisée en ce que** la soupape de non-retour (104 ou 105) présente un corps de fermeture (90), qui se déplace dans la direction longitudinale du piston (102).

13. Soupape centrale selon la revendication 12, **caractérisée en ce que** le corps de fermeture (90) est mobile librement dans des limites entre un siège de soupape (70) et un limiteur de course (80 ou 81).

14. Soupape centrale selon l'une quelconque des revendications précédentes, **caractérisée en ce que** le tube de boîtier (101) ne présente que trois raccords radiaux (A, P, B) et de ce fait toutes les ouvertures radiales (97, 98, 99) se trouvent à une de trois distances d'une première extrémité du tube de boîtier (101).
